# EUROPEAN PATENT APPLICATION

(11) **EP 4 429 062 A1**
(43) Date of publication of application: **11.09.2024**
(21) Application number: 21967485.0
(22) Date of filing: 13.12.2021
(51) Int. Cl.: H02J 3/32

(54) **CONVERSION APPARATUS, ELECTRONIC DEVICE, AND METHOD FOR CONTROLLING CONVERSION APPARATUS**

(71) Applicant: Huawei Technologies Co., Ltd., Shenzhen, Guangdong 518129 (CN)
(72) Inventor: HU, Zhangrong, Shenzhen, Guangdong 518129 (CN); YANG, Tianyu, Shenzhen, Guangdong 518129 (CN)
(74) Representative: Grünecker Patent- und Rechtsanwälte PartG mbB
(86) International application number: PCT/CN2021/137455
(87) International publication number: WO 2023/108342

(57) **Abstract**

This disclosure relates to a conversion apparatus, an electronic device including the conversion apparatus, and a method for controlling the conversion apparatus. The conversion apparatus includes: a first converter, including a plurality of switching devices, where the first converter is configured to turn on and off the plurality of switching devices for conversion between an alternating current power and a direct current power; a first direct current port, configured to couple the first converter to an energy storage apparatus; a first alternating current port, configured to couple the first converter to a wireless charging coil; and a second alternating current port, configured to couple the first converter to a first load. According to the solution of this disclosure, an area or space for arranging a circuit or a chip is reduced, product costs are reduced, and utilization of a device is improved.

## Description

### TECHNICAL FIELD

This disclosure mainly relates to the field of power electronics technologies, and more specifically, to a conversion apparatus that can implement function reusing, a method for controlling the conversion apparatus, and an electronic device including the conversion apparatus.

### BACKGROUND

Currently, an increasing quantity of electronic devices provide wireless charging functions. For example, in a smartphone, energy transmitted by a charging apparatus such as a charging pad may be received by using a power receiving coil, and the received electrical energy is rectified and adjusted by using a power circuit, to provide the electrical energy for a battery of the smartphone. This implements wireless charging of the battery of the mobile phone. In addition, an electronic device usually further includes some loads powered by a battery inside the electronic device. For example, a linear motor is disposed in a smartphone to provide a vibration alerting function. Such load needs to be driven by a dedicated power circuit or driver chip.

To implement a plurality of functions such as battery charging and load driving, a dedicated circuit or chip usually needs to be disposed in the electronic device. However, there are many problems in a current solution, for example, these dedicated circuits or chips need to occupy a large area or space in an increasingly miniaturized electronic device, and costs are high.

### SUMMARY

To resolve the foregoing problem, embodiments of this disclosure provide an improved conversion apparatus, an electronic device including the conversion apparatus, and a method for controlling the conversion apparatus.

According to a first aspect of this disclosure, a conversion apparatus is provided, including: a first converter, including a plurality of switching devices, where the first converter is configured to turn on and off the plurality of switching devices for conversion between an alternating current power and a direct current power; a first direct current port, configured to couple the first converter to an energy storage apparatus; a first alternating current port, configured to couple the first converter to a wireless charging coil; and a second alternating current port, configured to couple the first converter to a first load.

In some implementations of this disclosure, the first converter may be configured to perform power conversion during wireless charging or reverse wireless charging, or may be configured to drive the first load. By reusing the converter, a quantity of required power conversion circuits or chips can be reduced, and therefore reduces an area or space for arranging the circuits or chips, reduces product costs, and improves utilization of the power converter.

In some implementations of this disclosure, the plurality of switching devices are configured to: in response to reception of a first group of control signals, convert a first alternating current power received from the wireless charging coil through the first alternating current port into a first direct current power at the first direct current port, to provide the first direct current power for the energy storage apparatus. In this embodiment, the plurality of switching devices in the first converter may perform a rectification operation based on the control signal, to charge the energy storage apparatus.

In some implementations of this disclosure, the plurality of switching devices are configured to: in response to reception of a second group of control signals, convert a second direct current power received from the energy storage apparatus through the first direct current port into a second alternating current power at the first alternating current port, to provide the second alternating current power for the wireless charging coil. In this embodiment, the plurality of switching devices in the first converter may perform an inversion operation based on the control signal, so that the energy storage apparatus performs reverse charging on or discharges a load outside an electronic device.

In some implementations of this disclosure, the plurality of switching devices are configured to: in response to reception of a third group of control signals, convert a third direct current power received from the energy storage apparatus through the first direct current port into a third alternating current power at the second alternating current port, to provide the third alternating current power for the first load. In this embodiment, the plurality of switching devices in the first converter may perform an inversion operation based on the control signal, to drive the first load.

In some implementations of this disclosure, an alternating current frequency associated with the third alternating current power is different from an alternating current frequency associated with the first alternating current power or the second alternating current power. In this embodiment, the conversion apparatus or the converter can be reused without the need to provide additional devices for isolation, which has advantages of simplicity and low costs.

In some implementations of this disclosure, the conversion apparatus further includes: a load switch, coupled between the second alternating current port and the first load. In this manner, the first load can be effectively isolated from the wireless charging coil, to eliminate a quiescent current that may be generated in the first load.

In some implementations of this disclosure, the converter includes a first bridge arm and a second bridge arm, each of the first bridge arm and the second bridge arm includes at least two switching devices in the plurality of switching devices, and both the first alternating current port and the second alternating current port are coupled to the first bridge arm and the second bridge arm. In this embodiment, all bridge arms and switching devices in the first converter are reused for various functions, so that utilization of the switching devices in the first converter is maximized.

In some implementations of this disclosure, the first converter includes the first bridge arm, the second bridge arm, and a third bridge arm, each of the first bridge arm, the second bridge arm, and the third bridge arm includes at least two switching devices in the plurality of switching devices, the first alternating current port is coupled to the first bridge arm and the second bridge arm, and the second alternating current port is coupled to the second bridge arm and the third bridge arm. In this manner, an additional bridge arm may be used to isolate the first load from the wireless charging coil, to eliminate a quiescent current that may be generated in the first load.

In some implementations of this disclosure, the conversion apparatus further includes: a second converter, coupled between the first direct current port and the energy storage apparatus, and configured to perform a boost operation when the plurality of switching devices operate in response to the third group of control signals, so that a voltage of the first direct current port is higher than a voltage of the energy storage apparatus. In this embodiment, the second converter can be used to perform the boost operation to obtain a higher driving voltage to drive a high-voltage internal load, for example, a high-voltage linear motor. This avoids adding an additional boost (BOOST) circuit or chip specifically for the high-voltage internal load.

In some implementations of this disclosure, the first load includes at least one of a linear motor or a speaker. In this embodiment, the linear motor and the speaker are internal loads commonly used inside the electronic device, and usually need to be driven by a circuit similar to the power conversion circuit used in wireless charging. Therefore, the linear motor and the speaker may share a power converter used for wireless charging. In addition, operating frequencies of the linear motor and the speaker are different from an operating frequency of wireless charging. Therefore, when the power converter is shared, a function of the linear motor and the speaker and a function of wireless charging are not interfered with by each other.

According to a second aspect of this disclosure, a conversion apparatus is provided, including: a third converter, including a first group of switching devices, where the third converter is configured to turn on and off the first group of switching devices for conversion between an alternating current power and a direct current power; a fourth converter, including a second group of switching devices, where the fourth converter is configured to turn on and off the second group of switching devices to convert a direct current power to an alternating current power; at least one second direct current port, configured to couple the third converter and the fourth converter to an energy storage apparatus; a third alternating current port, configured to couple the third converter to a wireless charging coil; a fourth alternating current port, configured to couple the fourth converter to a first load; and a fifth converter, coupled to the third converter and the fourth converter through the at least one second direct current port, and coupled to the energy storage apparatus, and configured to increase a voltage of the energy storage apparatus and output an increased voltage to at least one of the third converter or the fourth converter. In this embodiment, a boost function of the fifth converter may be shared for two cases of reverse wireless charging and load driving. This saves an additional BOOST circuit or chip, and reduces costs and space occupation.

In some implementations of this disclosure, the fifth converter includes a first switching device and a second switching device, and the fifth converter is configured to increase the voltage of the energy storage apparatus through the first switching device and the second switching device, and output an increased voltage to at least one of the third converter and the fourth converter. In this embodiment, the third converter used for wireless charging or reverse charging and the fourth converter used for load driving share a boost circuit including the first switching device and the second switching device, and there is no need to separately set a boost circuit for wireless charging or reverse charging and load driving. In addition, with the arrangement in which the third converter and the fourth converter share a direct current port, the third converter and the fourth converter do not interfere with each other in terms of functions, and the first load may be used to release excess energy during charging overvoltage.

In some implementations of this disclosure, the fifth converter includes a first switching device, a second switching device, and a third switching device, and the fifth converter is configured to increase the voltage of the energy storage apparatus through the first switching device and the second switching device and output an increased voltage to the third converter, and is configured to increase the voltage of the energy storage apparatus through the third switching device and the second switching device and output an increased voltage to the fourth converter. In this embodiment, when the fifth converter is shared for wireless charging or reverse charging and load driving, different voltage requirements of the first load and an external load can be met.

According to a third aspect of this disclosure, an electronic device is provided, including an energy storage apparatus, a first load, a wireless charging coil, the conversion apparatus according to the first aspect, and a processing apparatus, configured to send an instruction to the conversion apparatus.

According to a fourth aspect of this disclosure, a method for controlling a conversion apparatus is provided. The conversion apparatus includes a first converter. The first converter is coupled to a first direct current port of an energy storage apparatus, the first converter is coupled to a first alternating current port of a wireless charging coil, and the first converter is coupled to a second alternating current port of a first load. The method includes: controlling on/off of a plurality of switching devices in the first converter for conversion between an alternating current power and a direct current power.

In some implementations of this disclosure, the controlling on/off of a plurality of switching devices in the first converter for conversion between an alternating current power and a direct current power includes: in response to reception of a first group of control signals by the plurality of switching devices, converting a first alternating current power received from the wireless charging coil through the first alternating current port into a first direct current power at the first direct current port, to provide the first direct current power for the energy storage apparatus.

In some implementations of this disclosure, the controlling on/off of a plurality of switching devices in the first converter for conversion between an alternating current power and a direct current power further includes: in response to reception of a second group of control signals by the plurality of switching devices, converting a second direct current power received from the energy storage apparatus through the first direct current port into a second alternating current power at the first alternating current port, to provide the second alternating current power for the wireless charging coil.

In some implementations of this disclosure, the controlling on/off of a plurality of switching devices in the first converter for conversion between an alternating current power and a direct current power further includes: in response to reception of a third group of control signals by the plurality of switching devices, converting a third direct current power received from the energy storage apparatus through the first direct current port into a third alternating current power at the second alternating current port, to provide the third alternating current power for the first load.

In some embodiments of this disclosure, an alternating current frequency associated with the third alternating current power is different from an alternating current frequency associated with the first alternating current power or the second alternating current power.

It may be understood that explanations or descriptions of the first aspect and the second aspect are also applicable to the third aspect and the fourth aspect. In addition, for beneficial effects that can be achieved in the third aspect and the fourth aspect, refer to beneficial effects in descriptions of corresponding apparatuses. Details are not described herein again.

The content described in the summary is not intended to limit critical or significant features of embodiments of this disclosure, and is it intended to limit the scope of this disclosure. Other features of this disclosure will be comprehensible from the following descriptions.

### BRIEF DESCRIPTION OF DRAWINGS

With reference to the accompanying drawings and the following detailed descriptions, the foregoing and other features, advantages, and aspects of embodiments of this disclosure become clearer. In the accompanying drawings, same or similar reference numerals denote same or similar elements.
FIG. 1 is a schematic circuit diagram of an electronic device and a peripheral device of the electronic device;
FIG. 2 is a schematic circuit diagram of an electronic device and a peripheral device of the electronic device according to an embodiment of this disclosure;
FIG. 3 is a schematic circuit diagram of an electronic device and a peripheral device of the electronic device according to an alternative embodiment of this disclosure;
FIG. 4 is a schematic circuit diagram of an electronic device and a peripheral device of the electronic device according to an alternative embodiment of this disclosure;
FIG. 5 is a schematic circuit diagram of an electronic device and a peripheral device of the electronic device according to an embodiment of this disclosure, in which an internal circuit of a second converter is schematically shown;
FIG. 6 is a schematic circuit diagram of an electronic device and a peripheral device of the electronic device according to another embodiment of this disclosure;
FIG. 7 is a schematic circuit diagram of an electronic device and a peripheral device of the electronic device according to an alternative embodiment of this disclosure; and
FIG. 8 is a schematic waveform diagram of a single-inductor multi-output boost circuit that includes a first switching device, a second switching device, and a third switching device.

### DESCRIPTION OF EMBODIMENTS

Embodiments of this disclosure are described in more detail below with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In descriptions of embodiments of this disclosure, the term "including" and similar terms thereof shall be understood as non-exclusive inclusion, that is, "including but not limited to". The term "based on" should be understood as "at least partially based on". The term "an embodiment" or "the embodiment" should be understood as "at least one embodiment". The term "first", "second", or the like may indicate different objects or a same object. The term "and/or" means at least one of two associated items. For example, "A and/or B represents A, B, or A and B. Other explicit and implicit definitions may also be included below.

It should be understood that, in the technical solutions provided in embodiments of this application, some repeated parts may not be described again in the following description of specific embodiments, but it should be considered that these specific embodiments are mutually referenced and may be combined.

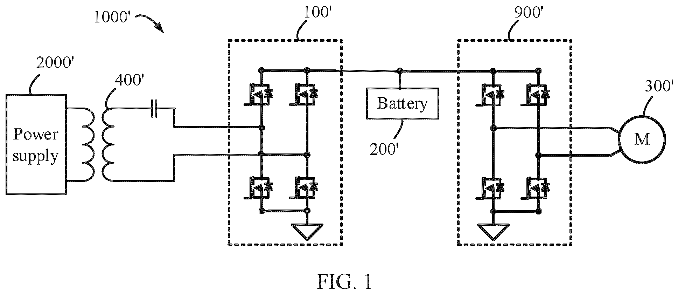

FIG. 1 is a schematic circuit diagram of an electronic device 1000' and a peripheral device of the electronic device 1000'. As shown in FIG. 1, the electronic device 1000' includes a first power circuit 100', a battery 200', and a wireless charging coil 400'. When a power supply 2000' charges the battery 200' of the electronic device 1000', the power supply 2000' transmits an alternating current power in a wireless manner by using a transmitting coil, and the alternating current power is received by the wireless charging coil 400' of the electronic device 1000'. The wireless charging coil 400' further inputs the received alternating current power to the first power circuit 100' to rectify the alternating current power to a direct current power, so as to provide the direct current power for the battery 200' for charging.

In addition, the electronic device 1000' further includes a second power circuit 900' and a load 300'. For example, in an electronic device such as a smartphone, the load 300' may be a linear motor that requires an alternating current power to drive. When driving the load 300', the battery 200 may input the direct current power to the second power circuit 900', and the second power circuit 900' performs inversion to obtain an alternating current power and input the alternating current power to the load 300', to drive the load 300'. In addition, it may be understood that, in addition to the load 300', the electronic device 1000' may further include another load and a power circuit corresponding to the load.

It can be learned that, in the solution shown in FIG. 1, to implement a plurality of functions such as wireless charging and load driving, a plurality of power circuits or a plurality of chips, such as the first power circuit 100' and the second power circuit 900', usually need to be disposed and used in the electronic device 1000', so as to implement rectification or inversion corresponding to the functions. Because a plurality of power circuits or a plurality of chips need to be disposed, a large arrangement area or space needs to be occupied in the electronic device 1000', and product costs are increased. In addition, these power circuits or chips have similar functions, but are rarely used at the same time, which results in low actual utilization.

In embodiments of this disclosure, an improved conversion apparatus and a method for controlling the conversion apparatus are provided, and an electronic device including the conversion apparatus is further provided. In an improved solution, by reusing a converter used for power conversion, a same converter can be used for implementing a plurality of functions. These functions include at least wireless charging of an energy storage apparatus, reverse wireless charging of an external load of the electronic device by the energy storage apparatus, driving an internal load such as a linear motor, and the like. Therefore, there is no need to dispose a dedicated drive circuit or drive chip for a load such as the linear motor, which reduces an area or space for arranging the circuit or chip, and reduces product costs. In addition, the converter in the conversion apparatus further has higher utilization, thereby avoiding a waste of resources.

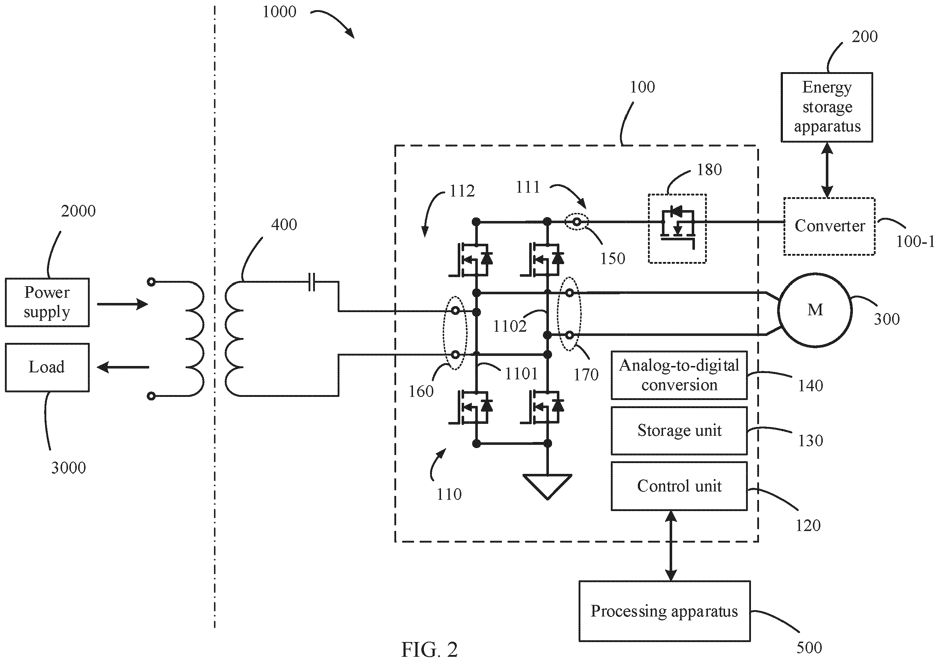

FIG. 2 is a schematic circuit diagram of an electronic device 1000 and a peripheral device of the electronic device 1000 according to an embodiment of this disclosure. For example, the electronic device 1000 may be a smartphone, a tablet computer, a notebook computer, a smartwatch, a personal digital assistant, or any other type of device that needs to be powered by an energy storage apparatus of the device.

As shown in FIG. 2, the electronic device 1000 may include a conversion apparatus 100, an energy storage apparatus 200, and a wireless charging coil 400. The electronic device 1000 may be coupled to a power supply 2000 in a wireless or non-contact manner through the wireless charging coil 400. The power supply 2000 may be, for example, a public power grid, a power supply apparatus connected to the public power grid, or any other type of device that can provide electrical energy, and therefore can transmit power to the electronic device 1000. For example, the power supply 2000 may be connected to a charging pad including a transmitting coil, and when the electronic device 1000 is close to or placed on the charging pad, the power supply 2000 may transmit power to the wireless charging coil 400 of the electronic device 1000 by using the transmitting coil of the charging pad. It may be understood that power transmission from the power supply 2000 to the electronic device 1000 may alternatively be implemented in another appropriate manner. For example, a transmitting coil may be disposed in the power supply 2000, and power may be directly transmitted from the power supply 2000 to the wireless charging coil 400 in a wireless manner without passing through an additional device. After the wireless charging coil 400 receives the power from the power supply 2000, the received power is further provided by the conversion apparatus 100 for the energy storage apparatus 200 of the electronic device 1000, to charge the energy storage apparatus 200. The electronic device 1000 may also be coupled to a load 3000 in a wireless or non-contact manner. The load 3000 may be a device that needs to be driven by electrical energy or can store electrical energy, and may be, for example, another electronic device similar to the electronic device 1000. The load 3000 may include a receiving coil or is connected to an apparatus, for example, a charging pad, connected to the receiving coil. Therefore, the energy storage apparatus 200 of the electronic device 1000 may convert, through the conversion apparatus 100 by adjusting a frequency, by using a duty cycle, or the like, power of electrical energy stored in the energy storage apparatus 200, and then reversely transmit the electrical energy to the load 3000 by using the wireless charging coil 400. In other words, the wireless charging coil 400 transmits power, and the receiving coil on the load 3000 side receives the power for use by the load 3000 or for storage by an energy storage apparatus in the load 3000. For example, the energy storage apparatus 200 may be a rechargeable battery, and includes but is not limited to a nickel-cadmium battery, a nickel-hydrogen battery, a lithium-ion battery, a lithium polymer battery, a lead-acid battery, or the like. In addition, the energy storage apparatus 200 may alternatively be another type of energy storage device, for example, a supercapacitor.

The electronic device 1000 may further include a first load 300. For example, the first load 300 may be a linear motor. Different from a conventional rotor motor, the linear motor implements vibration in a linear motion manner, to provide an alerting function for the electronic device 1000, for example, an incoming call notification of a smartphone. Generally, an alternating current voltage needs to be applied to a coil inside the linear motor. Therefore, a direct current power of the energy storage apparatus 200 needs to be converted into an alternating current power before being used to drive the linear motor. It may be understood that the first load 300 is not limited thereto, and may be another load in the electronic device 1000. For example, the first load 300 may alternatively be a speaker that also needs to be driven by an alternating current power. In addition, the electronic device 1000 may include a processing apparatus 500. The processing apparatus 500 is configured to send an instruction to the conversion apparatus 100. It may be understood that the processing apparatus 500 may further perform another calculating or processing task related to any function of the electronic device 1000. For example, the processing apparatus 500 may be an application processor in a smartphone or a smartwatch. For example, the processing apparatuses 500 include, but are not limited to, a central processing unit (CPU), a graphics processing unit (GPU), various dedicated artificial intelligence (Al) computing chips, various computing units that run machine learning model algorithms, a digital signal processor (DSP), any appropriate processor, controller, microcontroller, and the like.

The following describes in detail the conversion apparatus 100 of the electronic device 1000. According to an embodiment of this disclosure, the conversion apparatus 100 includes a first converter 110. The first converter 110 includes a plurality of switching devices. The first converter 110 is configured to turn on and off the plurality of switching devices for conversion between an alternating current power and a direct current power. Specifically, based on a requirement, the first converter 110 may perform, by controlling on/off of the plurality of switching devices, an inversion operation, that is, converting a direct current power into an alternating current power, or a rectification operation, that is, converting an alternating current power into a direct current power. For example, the plurality of switching devices in the first converter 110 may be controlled in a pulse width modulation (Pulse Width Modulation, PWM) manner or in another appropriate manner, to implement a rectification operation or an inversion operation. The plurality of switching devices in the first converter 110 may include, but are not limited to, an insulated gate bipolar transistor (Insulated Gate Bipolar Translator, IGBT), a junction gate field effect transistor (Junction Field-Effect Transistor, JFET), a bipolar junction transistor (Bipolar Junction Transistor, BJT), a metal-oxide-semiconductor field-effect transistor (Metal-Oxide-Semiconductor Field-Effect Transistor, MOSFET), a gate turn-off thyristor (Gate Turn Off thyristor, GTO), a MOS-controlled thyristor (MOS-Controlled Thyristor, MCT), an integrated gate-commutated thyristor (Integrated Gate-Commutated Thyristor, IGCT), a silicon carbide (SiC) switching device or a gallium nitride (GaN) switching device, or other power switching devices. As an example only, the first converter 110 may be a full-bridge circuit. However, it may be understood that the first converter 110 may be any other conversion circuit or apparatus capable of implementing a rectification operation and an inversion operation.

According to this embodiment of this disclosure, the conversion apparatus 100 may further include a first direct current port 150, a first alternating current port 160, and a second alternating current port 170. The first direct current port 150 is configured to couple the first converter 110 to the energy storage apparatus 200. The first alternating current port 160 is configured to couple the first converter 110 to the wireless charging coil 400. The second alternating current port 170 is configured to couple the first converter 110 to the first load 300. In other words, the conversion apparatus 100 may provide two alternating current ports. The first alternating current port 160 is configured to be coupled to the wireless charging coil 400 to help implement charging and reverse charging functions of the energy storage apparatus 200, and the second alternating current port 170 is configured to be coupled to the first load 300 such as a linear motor to help drive the first load 300. Therefore, the energy storage apparatus 200 implements reuse for a plurality of functions. In other words, a conversion apparatus or a power circuit does not need to be separately disposed for wireless charging (or reverse wireless charging) and the first load 300, and only the conversion apparatus 100 needs to be disposed.

Research shows that such reuse of the conversion apparatus or power circuit is feasible and has many advantages over a conventional solution. Specifically, when the power supply 2000 charges the energy storage apparatus 200 of the electronic device 1000 or the energy storage apparatus 200 reversely charges or discharges the load 3000, a power circuit needs to rectify an alternating current power received by the wireless charging coil 400 or invert a direct current power of the energy storage apparatus 200. When the first load 300 such as a linear motor is driven, the power circuit also needs to invert the direct current power of the energy storage apparatus 200, to obtain an alternating current power to drive the first load 300. These inversion or rectification operations are similar power conversion operations, and may be actually implemented by using a same conversion apparatus or power circuit. In addition, in a process of using the electronic device 1000, for example, a smartphone, wireless charging and vibration by driving a linear motor are rarely performed at the same time. For example, when the electronic device 1000 performs wireless charging, the electronic device 1000 is usually placed on a charging pad or a charging base and thus is far away from a user of the electronic device 1000. In this case, a vibration alerting function cannot work. In addition, to prevent the electronic device 1000 from being shifted during charging, which affects charging, the vibration function is usually disabled. Based on this, the improved solution of this disclosure proposes the same conversion apparatus 100 in the electronic device 1000 being used for wireless charging, and being further configured to drive an internal load (for example, a linear motor or a speaker). Therefore, a drive circuit or a drive apparatus required for driving the internal load can be removed. This reduces product costs, saves an area or space for arranging the drive circuit or the drive apparatus, and further improves utilization of the power conversion apparatus.

In addition, the improved solution of this disclosure may further bring other benefits. For example, in a wireless charging process, due to over-coupling, transient load change, or the like, overvoltage may occur on a direct current side of the conversion apparatus to damage a later-stage element. However, in this embodiment of this disclosure, when overvoltage occurs in wireless charging, the linear motor may be turned on to trigger vibration, so as to convert excess energy into mechanical energy. Thereby, there is no need for an additional discharge path for the overvoltage on the direct current side, which further reduces product costs and saves space or area.

The conversion apparatus 100 may support a plurality of operating modes, and the operating modes include, but are not limited to, a wireless charging mode, a reverse wireless charging mode, and a load driving mode. The processing apparatus 500 of the electronic device 1000 may send an instruction to the conversion apparatus 100 based on a scenario requirement, so that the conversion apparatus 100 works in a required operating mode. For example, when the electronic device 1000, for example, a smartphone receives an incoming call, the processing apparatus 500 may send an instruction to the conversion apparatus 100, so that the conversion apparatus 100 enters the load driving mode to drive the linear motor to vibrate. In an embodiment, the conversion apparatus 100 may include a control unit 120. The control unit 120 may receive an instruction from the processing apparatus 500, and complete switching and configuration of tasks of the plurality of operating modes based on the instruction. In addition, the control unit 120 may further execute a task such as a linear motor closed-loop algorithm. In this manner, software of the processing apparatus 500 can be less complex. However, it may be understood that an implementation of this disclosure is not limited thereto, and there may be another manner. For example, the processing apparatus 500 may directly control switching and configuration of tasks of the plurality of operating modes, without a need to dispose the control unit 120 in the conversion apparatus 100.

In an embodiment, the conversion apparatus 100 may further include a storage unit 130 and an analog-to-digital conversion unit 140. The storage unit 130 may store data and instructions required for a charging operation and a reverse charging operation. The analog-to-digital conversion unit 140 may be configured to detect and obtain various operating parameters of the first converter 110, such as a voltage and a current at the first direct current port 150, the first alternating current port 160, and/or the second alternating current port 170. In an operation of driving the first load 300 by the conversion apparatus 100, the storage unit 130 and the analog-to-digital conversion unit 140 may also provide help. For example, the analog-to-digital conversion unit 140 may detect a back electromotive force at two ends of the linear motor, to follow up a resonance frequency of the linear motor to implement closed-loop control, and the storage unit 130 may be configured to store a vibration sequence of the linear motor. As a comparison, in a conventional solution, a charging chip including an analog-to-digital converter and a memory is disposed for a charging requirement, and to drive a load such as the linear motor, a drive chip also including an analog-to-digital converter and a read-only memory is usually further disposed. Clearly, these repeatedly disposed components increase product costs. In comparison, in the solution of this disclosure, the reuse of the storage unit 130 and the analog-to-digital conversion unit 140 in plurality of functions reduces product costs and effectively improves device utilization. In an embodiment, the conversion apparatus 100 may further include a low dropout regulator (Low Dropout Regulator, LDO) 180. The LDO 180 may be coupled between the first converter 110 and the energy storage apparatus 200, to help stabilize a voltage from the first converter 110 when the energy storage apparatus 200 is charged.

In some embodiments of this disclosure, the plurality of switching devices in the first converter 110 are configured to: in response to reception of a first group of control signals, convert a first alternating current power received from the wireless charging coil 400 through the first alternating current port 160 into a first direct current power at the first direct current port 150, to provide the first direct current power for the energy storage apparatus 200. For example, when the power supply 2000 is coupled to the electronic device 1000 and is ready to charge the energy storage apparatus 200, based on a detected power transmission from the power supply 2000 or a received data packet that is sent by a charging pad according to a charging protocol, the processing apparatus 500 of the electronic device 1000 may send an instruction to the control unit 120, to indicate the conversion apparatus 100 to enter the wireless charging mode. The control unit 120 sends the first group of control signals to the plurality of switching devices in the first converter 110 to turn on and off the plurality of switching devices. The first converter 110 rectifies the first alternating current power received through the first alternating current port 160. A rectified direct current power is provided for the energy storage apparatus 200 through the first direct current port 150 for charging. However, it may be understood that a manner of controlling the plurality of switching devices is not limited thereto, and there may be another manner. For example, the processing apparatus 500 may directly send the first group of control signals to the plurality of switching devices in the first converter 110, so that the conversion apparatus 100 enters the wireless charging mode.

In some embodiments of this disclosure, the plurality of switching devices in the first converter 110 are configured to: in response to reception of a second group of control signals, convert a second direct current power received from the energy storage apparatus 200 through the first direct current port 150 into a second alternating current power at the first alternating current port 160, to provide the second alternating current power for the wireless charging coil 400. For example, when the load 3000 is coupled to the electronic device 1000 and the electronic device 1000 needs to perform reverse charging on the load 3000, the processing apparatus 500 of the electronic device 1000 may send an instruction to the control unit 120 based on a detected charging request for the load 3000, to indicate the conversion apparatus 100 to enter the reverse wireless charging mode. The control unit 120 sends the second group of control signals to the plurality of switching devices in the first converter 110 to turn on and off the plurality of switching devices. The first converter 110 inverts the second direct current power received through the first direct current port 150. An inverted alternating current power is provided for the wireless charging coil 400 through the first alternating current port 160, to perform reverse charging on the load 3000. However, it may be understood that a manner of controlling the plurality of switching devices is not limited thereto, and there may be another manner. For example, the processing apparatus 500 may directly send the second group of control signals to the plurality of switching devices in the first converter 110, so that the conversion apparatus 100 enters the reverse wireless charging mode.

In some embodiments of this disclosure, the plurality of switching devices in the first converter 110 are configured to: in response to reception of a third group of control signals, convert a third direct current power received from the energy storage apparatus 200 through the first direct current port 150 into a third alternating current power at the second alternating current port 170, to provide the third alternating current power for the first load 300. For example, the electronic device 1000 may need to drive the first load 300. For example, the electronic device 1000 used as a smartphone receives an incoming call, and needs to drive the first load 300 used as a linear motor to vibrate so as to remind the user of the electronic device 1000. When the first load 300 needs to be driven, the processing apparatus 500 may send an instruction to the control unit 120, to indicate the conversion apparatus 100 to enter the load driving mode. The control unit 120 sends the third group of control signals to the plurality of switching devices in the first converter 110 to turn on and off the plurality of switching devices. The first converter 110 inverts the third direct current power received through the first direct current port 150. An inverted alternating current power is provided for the first load 300 through the second alternating current port 170, to drive the first load 300, for example, the linear motor is driven to vibrate. However, it may be understood that a manner of controlling the plurality of switching devices is not limited thereto, and there may be another manner. For example, the processing apparatus 500 may directly send the third group of control signals to the plurality of switching devices in the first converter 110, so that the conversion apparatus 100 enters the load driving mode.

In some embodiments of this disclosure, an alternating current frequency associated with the third alternating current power is different from an alternating current frequency associated with the first alternating current power or the second alternating current power. Specifically, the third alternating current power is an alternating current power, at the second alternating current port 170, used to drive the first load 300, the first alternating current power is an alternating current power, at the first alternating current port 160, used to charge the energy storage apparatus 200, and the second alternating current power is an alternating current power, at the first alternating current port 160, used to perform reverse charging on the external load 3000. The first alternating current port 160 and the second alternating current port 170 share a same converter, namely, the first converter 110. If the alternating current frequency associated with the third alternating current power is different from that of the first alternating current power or the second alternating current power, the first load 300 connected to the first alternating current port 160 and the wireless charging coil 400 connected to the second alternating current port 170 may not interfere with each other in terms of functions, and therefore may be directly connected in parallel for use. For example, when the second alternating current port 170 is connected to and drives the linear motor, because a resonance frequency of the linear motor is generally 100 Hz to 300 Hz, the alternating current frequency associated with the third alternating current power is maintained at 100 Hz to 300 Hz. A resonance frequency of wireless charging or reverse wireless charging is generally 100 kHz to 200 kHz, and therefore, the alternating current frequency associated with the first alternating current power or the second alternating current power is maintained at 100 kHz to 200 kHz. In this case, there is a difference of three orders of magnitude between the alternating current frequency associated with the third alternating current power and the alternating current frequency associated with the first alternating current power or the second alternating current power. Therefore, vibration of the linear motor does not induce energy on the wireless charging coil, and wireless charging does not cause vibration of the motor. In some cases, some additional means can be taken to ensure that wireless charging or reverse charging and load driving do not interfere with each other in terms of functions. For example, a resonance frequency of wireless charging is 100 kHz to 200 kHz, and a PWM signal whose switching frequency of 20 kHz to 40 kHz may be used to drive a linear motor whose resonance frequency is 100 Hz to 300 Hz. However, in impedance spectroscopy of wireless charging resonance parameters of some electronic devices, impedance existing when the switching frequency is around 20 kHz to 40 kHz may be small. To further eliminate possible interference, a switching frequency of a PWM signal that is used to drive the linear motor may be changed, for example, a PWM signal whose switching frequency is 1 MHz is used. Alternatively, the resonance frequency of wireless charging is changed, for example, charging is performed at a frequency of 6.78 MHz, so that a difference between the switching frequency of the PWM signal of the linear motor and the resonance frequency of wireless charging is large, and it is ensured that the switching frequency corresponds to large impedance in an impedance spectroscopy. This ensures that wireless charging or reverse charging and load driving do not interfere with each other. Similarly, a frequency of a speaker is within a frequency range of 20 Hz to 20 kHz that can be detected by a human ear, and a resonance frequency of wireless charging or reverse wireless charging is 5 to 10 times of the frequency. Therefore, the speaker and wireless charging or reverse wireless charging do not interfere with each other in terms of functions. Because the wireless charging coil 400 and the first load 300 do not interfere with each other, the wireless charging coil 400 may be directly connected to the first alternating current port 160, and the first load 300 may be directly connected to the second alternating current port 170, without affecting functions of each other.

In addition, when the first load 300 and the wireless charging coil 400 are directly connected in parallel, coordination may be performed by using the control unit 120 and the processing apparatus 500, to implement time-division reuse of the first converter 110 by using software. For example, in a wireless charging or reverse charging process, if a scenario in which the linear motor needs to immediately vibrate (for example, an incoming call or an alarm clock) is encountered, the processing apparatus 500 may send an instruction to the control unit 120, so that the conversion apparatus 100 temporarily exits the wireless charging mode or the reverse wireless charging mode, and enters the load driving mode, that is, send the third group of control signals to enable the first converter 110 to drive the linear motor to vibrate. Then, after vibration ends, the processing apparatus 500 sends an instruction to the control unit 120, so that the conversion apparatus 100 returns to the wireless charging mode or the reverse wireless charging mode again. In this manner, the conversion apparatus or the converter can be reused without the need to provide additional devices for isolation, which has advantages of simplicity and low costs.

In some embodiments of this disclosure, the first converter 110 includes a first bridge arm 1101 and a second bridge arm 1102, each of the first bridge arm 1101 and the second bridge arm 1102 includes at least two switching devices in the plurality of switching devices, and both the first alternating current port 160 and the second alternating current port 170 are coupled to the first bridge arm 1101 and the second bridge arm 1102. For example, the first bridge arm 1101 and the second bridge arm 1102 may form a full-bridge circuit, and the two bridge arms are used to perform power conversion in the plurality modes such as the wireless charging mode, the reverse wireless charging mode, and the load driving mode. In other words, the full-bridge circuit may be configured to perform an inversion or rectification operation between the direct current port 150 and the first alternating current port 160, or may be configured to perform an inversion operation between the direct current port 150 and the second alternating current port 170. In this implementation, all bridge arms and the switching devices in the first converter 110 are reused for various functions, so that utilization of the switching devices in the first converter 110 is maximized. For example, each of the first bridge arm 1101 and the second bridge arm 1102 may include two switching devices that are respectively located on an upper bridge arm and a lower bridge arm. However, each bridge arm may include more or fewer switching devices, and may further include another appropriate electrical component, such as a capacitor or a resistor, provided that the first converter 110 constructed by such bridge arm can implement the rectification and inversion operations.

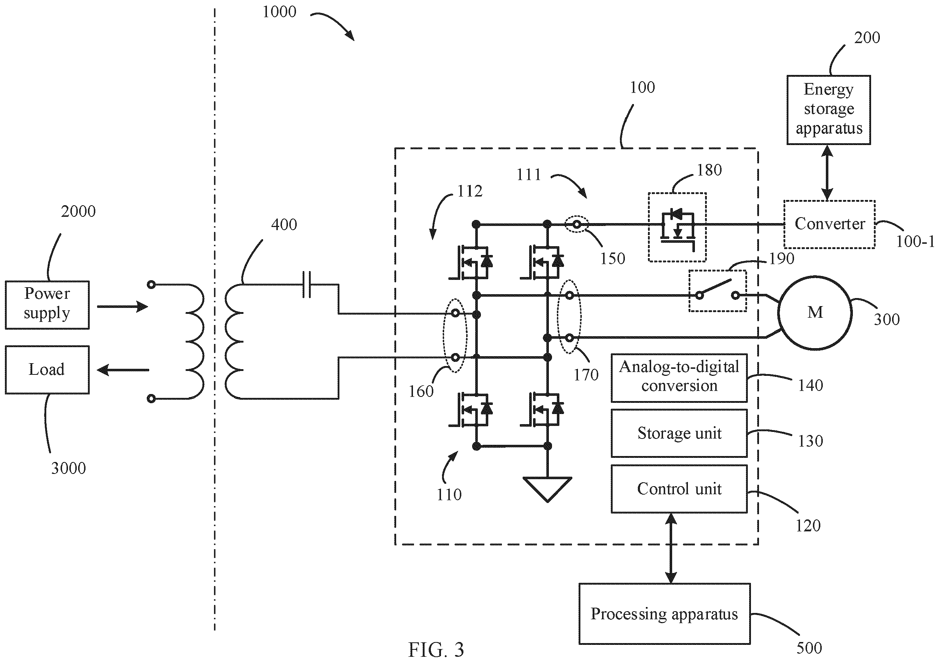

FIG. 3 is a schematic circuit diagram of the electronic device 1000 and a peripheral device of the electronic device 1000 according to an alternative embodiment of this disclosure. A main difference of the electronic device 1000 in FIG. 3 from that in FIG. 2 is that the conversion apparatus 100 further includes a load switch 190. The load switch 190 is coupled between the second alternating current port 170 and the first load 300. A function of the load switch 190 is to isolate the first load 300 from the wireless charging coil 400. As discussed above, generally, the first load 300 and the wireless charging coil 400 that work at different frequencies do not interfere with each other in terms of functions. However, when a working voltage of wireless charging is high, an unexpected quiescent current is generated on an equivalent direct current resistor inside the first load 300 such as a linear motor. Therefore, the load switch 190 may be turned off at an appropriate time period. For example, when the wireless charging coil 400 needs to perform a wireless charging or reverse wireless charging operation, that is, when the conversion apparatus 100 is in a wireless charging mode or a reverse wireless charging mode, the load switch 190 is set to an off state. In this way, the first load 300 can be isolated from the wireless charging coil 400, to eliminate a quiescent current that may be generated on the resistor inside the first load 300. The load switch 190 may be a power switching device, for example, a bidirectional cut-off MOS field effect transistor. In addition, the load switch 190 may alternatively be an electrical switch such as a relay. It may be understood that, although FIG. 3 shows the load switch 190 being disposed in the conversion apparatus 100, the load switch 190 may alternatively be disposed inside the first load 300, or may be independently disposed between the conversion apparatus 100 and the first load 300. Other apparatuses or devices shown in FIG. 3 are similar to those shown in FIG. 2, and therefore details are not described again.

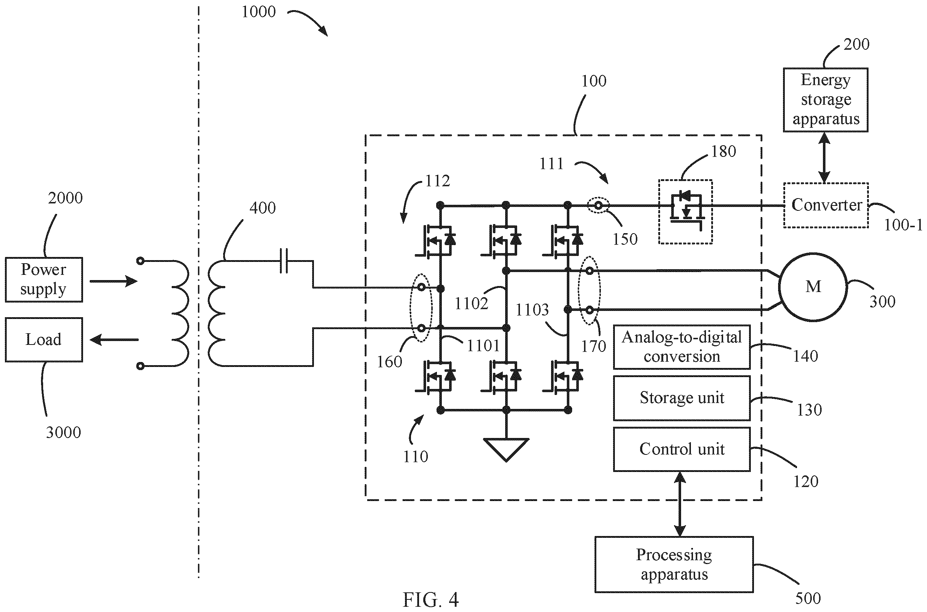

FIG. 4 is a schematic circuit diagram of the electronic device 1000 and a peripheral device of the electronic device 1000 according to an alternative embodiment of this disclosure. As shown in FIG. 4, the first converter 110 includes a first bridge arm 1101, a second bridge arm 1102, and a third bridge arm 1103. Each of the first bridge arm 1101, the second bridge arm 1102, and the third bridge arm 1103 includes at least two switching devices in the plurality of switching devices. The first alternating current port 160 is coupled to the first bridge arm 1101 and the second bridge arm 1102, and the second alternating current port 170 is coupled to the second bridge arm 1102 and the third bridge arm 1103. It can be seen that, compared with the first converter 110 in FIG. 2, the first converter 110 in FIG. 4 is added with the additional bridge arm 1103. Therefore, the full-bridge circuit including the first bridge arm 1101 and the second bridge arm 1102 is used for wireless charging or reverse wireless charging, and an unrelated switching device on the third bridge arm 1103 is turned off during wireless charging or reverse wireless charging. The second bridge arm 1102 and the third bridge arm 1103 form a full-bridge circuit to drive the first load 300, and when the first load 300 is driven, an unrelated switching device on the first bridge arm 1101 is turned off. In this manner, the wireless charging coil 400 may also be isolated from the first load 300 in different operating modes, to eliminate a quiescent current that may be generated on the resistor inside the first load 300. Other apparatuses or devices shown in FIG. 4 are similar to those shown in FIG. 2, and therefore details are not described again.

As shown in FIG. 2, FIG. 3, and FIG. 4, in some embodiments of this disclosure, the conversion apparatus 100 may include a second converter 100-1. The second converter 100-1 is coupled between the first direct current port 150 and the energy storage apparatus 200. For example, the second converter 100-1 may be a charging management circuit or a chip (Charger IC), or may be a part of a charging management circuit or a chip, to manage charging and discharging of the energy storage apparatus 200, for example, control a voltage of charging and discharging. It may be understood that the second converter 100-1 may be a part of the conversion apparatus 100, for example, may be directly formed in the conversion apparatus 100. In an alternative embodiment, the second converter 100-1 may alternatively be a circuit or apparatus independent of the conversion apparatus 100.

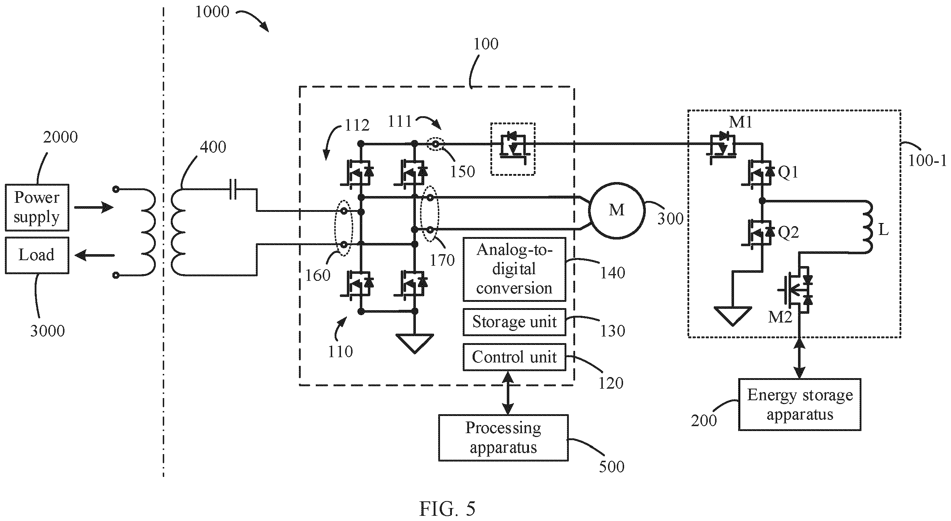

FIG. 5 is a schematic circuit diagram of the electronic device 1000 and a peripheral device of the electronic device 1000 according to an embodiment of this disclosure, in which an internal circuit of the second converter 100-1 is schematically shown. For example, the second converter 100-1 may include a two-quadrant direct current-direct current conversion circuit formed by switching devices Q1 and Q2. When the energy storage apparatus 200 is charged, the two-quadrant direct current-direct current conversion circuit in the second converter 100-1 may work as a BUCK circuit. To be specific, the second converter 100-1 appropriately decreases a voltage rectified by the first converter 110, to input a decreased voltage to the energy storage apparatus 200 to implement charging. The load 3000 coupled to the electronic device 1000 may be external OTG (On-The-Go) devices such as a mouse and a keyboard, and these external OTG devices require a higher working voltage. When the electronic device 1000 is coupled to an external OTG device, the second converter 100-1 may work in an OTG mode, that is, the two-quadrant direct current-direct current conversion circuit in the second converter 100-1 may work as a BOOST circuit. To be specific, a voltage of the energy storage apparatus 200 is appropriately increased, and an increased voltage is then output to the first direct current port 150, to supply power to the external OTG device. In an embodiment, the second converter 100-1 may further include an anti-backflow switching device M1, a path switching device M2, and an inductor L. The anti-backflow switching device M1 is configured to avoid backflow when the energy storage apparatus 200 is charged. The path switching device M2 is configured to control and adjust charging and discharging of the energy storage apparatus 200.

In some cases, the first load 300 may include a load that needs to be driven by a high voltage, for example, some high-performance linear motors. Examples of the high-performance linear motors include, but are not limited to, X-axis linear motors with a large volume and a long stroke. To implement quick vibration and quick stop and improve a vibration response speed, a high voltage, for example, a voltage of up to 9 V, usually needs to be applied to drive the linear motor. However, the voltage of the energy storage apparatus 200 such as a battery is usually low, for example, 3.6 V to 4.4 V To drive an internal load such as the high-performance linear motor, an additional BOOST circuit or chip is usually needed to increase a voltage. For example, in the electronic device 1000' shown in FIG. 1, if the load 300' is a load that needs to be driven by a high voltage, a BOOST circuit or chip needs to be additionally disposed between the battery 200' and the second power circuit 900'. However, in some embodiments of this disclosure, the second converter 100-1 may be used to implement a boost operation to drive the internal load that needs to be driven by a high voltage. Specifically, the second converter 100-1 may be configured to perform the boost operation when the plurality of switching devices in the first converter 110 operate in response to the third group of control signals, so that a voltage of the first direct current port 150 is higher than the voltage of the energy storage apparatus 200. In other words, when the first converter 110 drives the first load 300, the second converter 100-1 may perform a boost operation to provide an increased voltage for the first converter 110, so that the first load 300 obtains a higher driving voltage. It can be learned that, in the solution of this disclosure, the second converter 100-1 may be used to perform the boost operation, to obtain a higher driving voltage to drive the high-voltage linear motor. This avoids adding an additional BOOST circuit or chip specifically for the high-voltage linear motor. In other words, the second converter 100-1 may not only be used to increase or decrease a voltage when the energy storage apparatus 200 is charged and drives the external OTG device, but also be used in place of a BOOST circuit or chip when driving the first load 300 of the high-voltage linear motor or the like. This advantageously implements reuse of the second converter 100-1, and further reduces product costs and saves a layout area or space. It may be understood that the first load 300 that needs to be driven by a high voltage is not limited to the high-voltage linear motor, but may be another type of load, for example, a speaker.

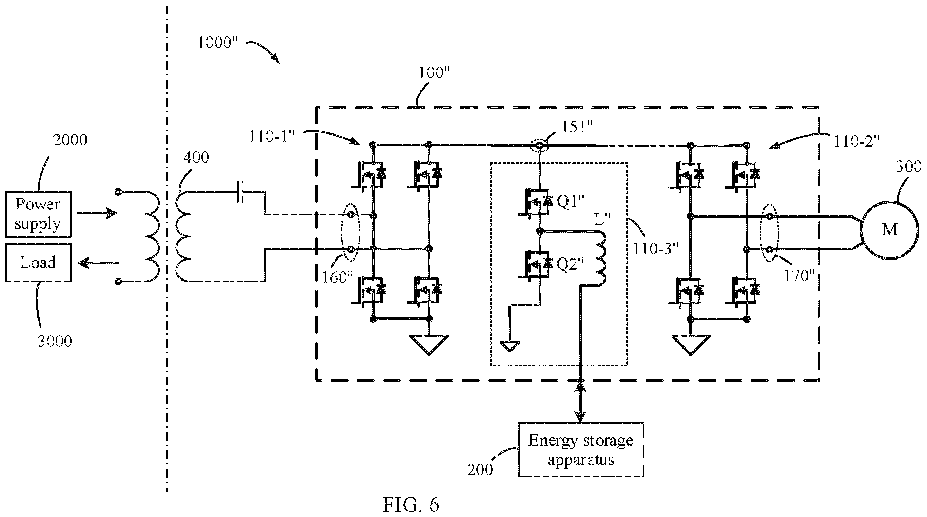

It should be noted that, an implementation of using the second converter 100-1 in place of a dedicated BOOST circuit or chip to drive a high-voltage load may not only be applied to the electronic device 1000 shown in FIG. 2, but also be applied to an electronic device similar to the electronic device 1000' shown in FIG. 1. FIG. 6 is a schematic circuit diagram of an electronic device 1000" and a peripheral device of the electronic device 1000" according to another embodiment of this disclosure.

As shown in FIG. 6, the electronic device 1000" may include a conversion apparatus 100". The conversion apparatus 100" includes a third converter 110-1" and a fourth converter 110-2". The third converter 110-1" includes a first group of switching devices. The third converter 110-1" is configured to turn on and off the first group of switching devices for conversion between an alternating current power and a direct current power. The fourth converter 110-2" includes a second group of switching devices. The fourth converter 110-2" is configured to turn on and off the second group of switching devices to convert a direct current power to an alternating current power. The conversion apparatus 100" further includes a direct current port 151", an alternating current port 160", and an alternating current port 170". The direct current port 151" is configured to couple the third converter 110-1" and the fourth converter 110-2" to an energy storage apparatus 200. The alternating current port 160" is configured to couple the third converter 110-1‴ to a wireless charging coil 400. The alternating current port 170‴ is configured to couple the fourth converter 110-2" to a first load 300.

In addition, the conversion apparatus 100" is provided with a fifth converter 110-3". The fifth converter 110-3" is coupled to the third converter 110-1" and the fourth converter 110-2" through the direct current port 151", and coupled to the energy storage apparatus 200, and is configured to increase a voltage of the energy storage apparatus 200 and output an increased voltage to at least one of the third converter 110-1‴ and the fourth converter 110-2'". For example, when the energy storage apparatus 200 needs to be charged, the fifth converter 110-3" may provide a buck operation. When the electronic device 1000" is coupled to an external OTG device (for example, a mouse or a keyboard), the fifth converter 110-3" may provide an increased voltage for the third converter 110-1", to supply the increased voltage to the external OTG device. When the first load 300 (for example, a high-voltage linear motor or a speaker) needs to be driven by a high voltage, the fifth converter 110-3" may perform a boost operation to provide an increased voltage for the fourth converter 110-2", so that the first load 300 obtains a higher driving voltage. In this way, there is no need to provide an additional dedicated BOOST circuit or chip for the load such as a high-voltage linear motor, which reduces product costs and saves a layout area or space. In some embodiments, the fifth converter 110-3" includes a first switching device Q1" and a second switching device Q2". The fifth converter 110-3" is configured to increase the voltage of the energy storage apparatus 200 through the first switching device Q1" and the second switching device Q2", and then output an increased voltage to at least one of the third converter 110-1‴ and the fourth converter 110-2". Similar to the second converter 100-1 in FIG. 5, the first switching device Q1" and the second switching device Q2" form a two-quadrant direct current-direct current conversion circuit, and therefore provide a boost function and a buck function in two power flow directions, respectively. In such arrangement, the third converter 110-1" and the fourth converter 110-2" share the direct current port 151". Therefore, the direct current port 151" may be directly used to drive both the first load 300 and an external load 3000. When only the first load 300 or the external load 3000 needs to be driven, because operating frequencies of the wireless charging coil 400 and the first load 300 are usually different, the wireless charging coil 400 and the first load 300 do not interfere with each other in terms of functions. This is also advantageous for charging of the energy storage apparatus 200. For example, in a process in which the third converter 110-1" charges the energy storage apparatus 200, if overvoltage occurs at an output of the third converter 110-1" or the direct current port 151", excess energy may be released by driving a linear motor to vibrate or driving another type of load, thereby resolving an overvoltage problem.

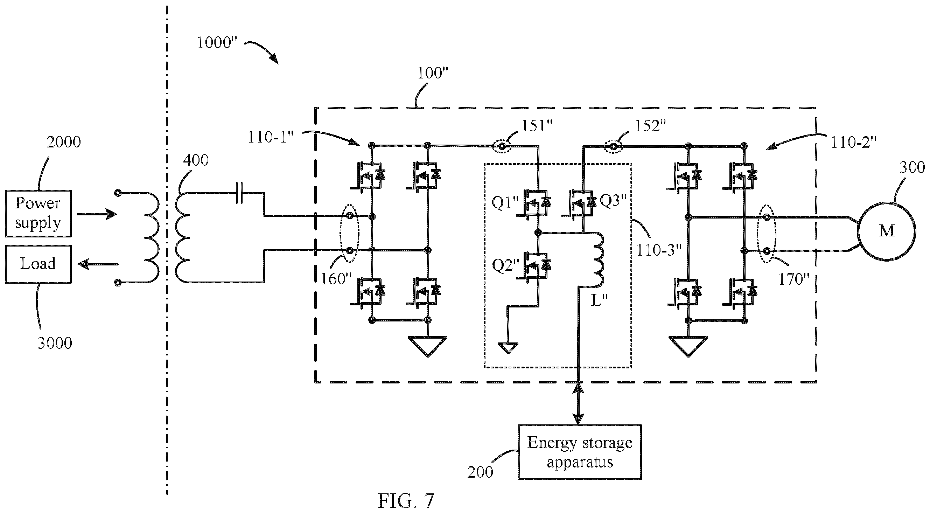

However, in some cases, voltage requirements of the high-voltage-driven first load 300 and the external load 3000 are inconsistent, which limits the use of the electronic device 1000" in FIG. 6. FIG. 7 is a schematic circuit diagram of the electronic device 1000" and a peripheral device of the electronic device 1000" according to an alternative embodiment of this disclosure. A main difference of the electronic device 1000" in FIG. 7 from FIG. 6 is that, the fifth converter 110-3" is coupled to the third converter 110-1" through the direct current port 151", and is coupled to the fourth converter 110-2" through another direct current port 152". In addition, the fifth converter 110-3" may include a first switching device Q1", a second switching device Q2", and a third switching device Q3". The fifth converter 110-3" is configured to increase the voltage of the energy storage apparatus 200 through the first switching device Q1" and the second switching device Q2" and output an increased voltage to the third converter 110-1", and is configured to increase the voltage of the energy storage apparatus 200 through the third switching device Q3" and the second switching device Q2" and output an increased voltage to the fourth converter 110-2". In other words, the third switching device Q3" is further added to the fifth converter 110-3" in FIG. 7, and the fourth converter 110-2" and the fifth converter 110-3" are coupled by using the another direct current port 152". A control unit or a processing apparatus of the electronic device 1000" may properly control the fifth converter 110-3" based on a requirement or an application scenario, to implement a corresponding function. For example, when a voltage needs to be increased to drive the external load 3000 and not drive the first load 300, the third switching device Q3" of the fifth converter 110-3" may be turned off, and the first switching device Q1" and the second switching device Q2" are controlled to operate as a BOOST circuit. When a voltage needs to be increased to drive the first load 300 and not drive the external load 3000, the first switching device Q1" of the fifth converter 110-3" may be turned off, and the third switching device Q3" and the second switching device Q2" are controlled to operate as a BOOST circuit. When a voltage needs to be increased to drive the first load 300 and the external load 3000 at the same time, the first switching device Q1 ", the second switching device Q2 ", and the third switching device Q3" may form a single-inductor multi-output (Single Inductor Multi Output, SIMO) BOOST circuit, to output power to both the third converter 110-1" and the fourth converter 110-2' ".

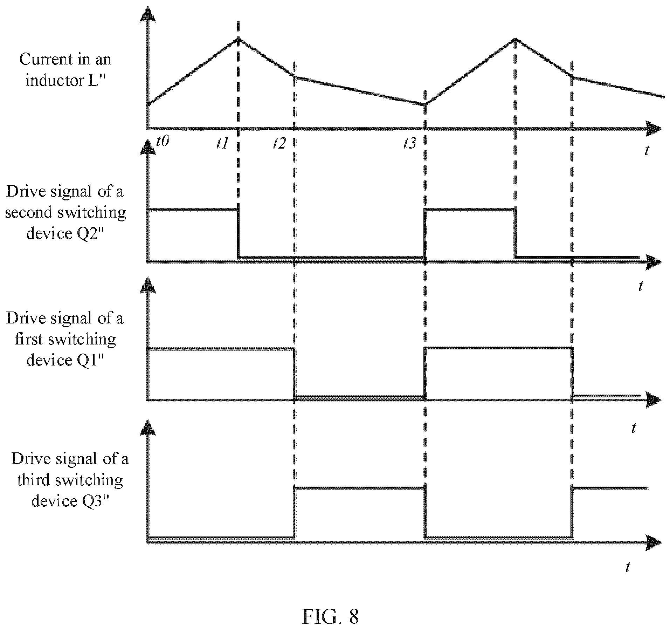

FIG. 8 is a schematic waveform diagram of a SIMO BOOST circuit including the first switching device Q1", the second switching device Q2", and the third switching device Q3". When a voltage needs to be increased to drive both the first load 300 and the external load 3000, a branch formed by the first switching device Q1" and the second switching device Q2" supplies power to the external load 3000, and a branch formed by the second switching device Q2" and the third switching device Q3" supplies power to the first load 300. As shown in FIG. 8, from a moment to to a moment t1, the second switching device Q2" is turned on, and a current in an inductor L" increases, so that the inductor L" is charged for energy storage; from the moment t1 to a moment t2, the second switching device Q2" is turned off, the first switching device Q1" is turned on, and energy of the inductor L‴ is transmitted to the direct current port 151"; and from the moment t2 to a moment t3, the first switching device Q1" is turned off, the third switching device Q3" is turned on, and energy of the inductor L" is transmitted to the direct current port 152". By adjusting turn-on time of the first switching device Q1" and the third switching device Q3", voltages may be respectively adjusted for two outputs to the direct current port 151" and the direct current port 152", to meet different voltage requirements of the first load 300 and the external load 3000.

In the embodiment of FIG. 6 to FIG. 8, reverse wireless charging and load driving in the electronic device 1000" share a same converter to implement a boost function, and an operating mode of the converter may be further switched based on a requirement and an application scenario. This avoids that a BOOST circuit or chip is separately disposed for reverse wireless charging and load driving, and therefore reduces costs and space occupation. For example, the fifth converter 110-3" may be a charging management circuit or a chip (Charger IC), or a part of a charging management circuit or a chip, and therefore may provide a voltage of more than 9 V for the first load 300 and the external load 3000 by using an OTG mode in the charging management circuit or the chip. It may be understood that the fifth converter 110-3" may alternatively be implemented by using a separate BOOST circuit or chip.

According to another embodiment of this disclosure, a method for controlling a conversion apparatus 100 is further provided. The method includes: controlling on/off of a plurality of switching devices in a first converter 110 for conversion between an alternating current power and a direct current power.

In some embodiments of this disclosure, the controlling on/off of a plurality of switching devices in a first converter 110 for conversion between an alternating current power and a direct current power includes: in response to reception of a first group of control signals by the plurality of switching devices, convert a first alternating current power received from a wireless charging coil 400 through a first alternating current port 160 into a first direct current power at a first direct current port 150, to provide the first direct current power for an energy storage apparatus 200.

In some embodiments of this disclosure, the controlling on/off of a plurality of switching devices in a first converter 110 for conversion between an alternating current power and a direct current power further includes: in response to reception of a second group of control signals by the plurality of switching devices, convert a second direct current power received from the energy storage apparatus 200 through the first direct current port 150 into a second alternating current power at the first alternating current port 160, to provide the second alternating current power for the wireless charging coil 400.

In some embodiments of this disclosure, the controlling on/off of a plurality of switching devices in a first converter 110 for conversion between an alternating current power and a direct current power further includes: in response to reception of a third group of control signals by the plurality of switching devices, convert a third direct current power received from the energy storage apparatus 200 through the first direct current port 150 into a third alternating current power at a second alternating current port 170, to provide the third alternating current power for a first load 300.

In some embodiments of this disclosure, an alternating current frequency associated with the third alternating current power is different from an alternating current frequency associated with the first alternating current power or the second alternating current power.

In some embodiments of this disclosure, the method further includes: turning off a load switch 190 when the plurality of switching devices operate in response to the first group of control signals or the second group of control signals; and turning on the load switch 190 when the plurality of switching devices operate in response to the third group of control signals.

In some embodiments of this disclosure, the method further includes: turning off a switching device of a third bridge arm 1103 in response to reception of the first group of control signals or the second group of control signals by the plurality of switching devices; and turning off a switching device of a first bridge arm 1101 in response to reception of the third group of control signals by the plurality of switching devices.

In some embodiments of this disclosure, the method further includes: when the plurality of switching devices operate in response to the third group of control signals, performing a boost operation on a second converter 100-1, so that a voltage of the first direct current port 150 is higher than a voltage of the energy storage apparatus 200.

Many modifications and other implementations of this disclosure given herein will be realized by a person skilled in the art related to this disclosure through teachings given in the foregoing description and the related accompanying drawings. Therefore, it should be understood that implementations of this disclosure are not limited to the disclosed specific implementations, and modifications and other implementations are intended to fall within the scope of this disclosure. Further, although the foregoing description and related accompanying drawings describe example implementations with some example combinations of components and/or functions, it should be aware that different combinations of components and/or functions may be provided by alternative implementations without departing from the scope of the disclosure. In this regard, for example, other combinations of components and/or functions that are different from those explicitly described above are also expected to fall within the scope of this disclosure. Although specific terms are used herein, the terms are used only in general and descriptive meanings and are not intended to be limited.

## Claims

1. A conversion apparatus (100), comprising:
a first converter (110), comprising a plurality of switching devices, wherein the first converter (110) is configured to turn on and off the plurality of switching devices for conversion between an alternating current power and a direct current power;
a first direct current port (150), configured to couple the first converter (110) to an energy storage apparatus (200);
a first alternating current port (160), configured to couple the first converter (110) to a wireless charging coil (400); and
a second alternating current port (170), configured to couple the first converter (110) to a first load (300).

2. The conversion apparatus (100) according to claim 1, wherein the plurality of switching devices are configured to:
in response to reception of a first group of control signals, convert a first alternating current power received from the wireless charging coil (400) through the first alternating current port (160) into a first direct current power at the first direct current port (150), to provide the first direct current power for the energy storage apparatus (200).

3. The conversion apparatus (100) according to claim 1 or 2, wherein the plurality of switching devices are configured to:
in response to reception of a second group of control signals, convert a second direct current power received from the energy storage apparatus (200) through the first direct current port (150) into a second alternating current power at the first alternating current port (160), to provide the second alternating current power for the wireless charging coil (400).

4. The conversion apparatus (100) according to any one of claims 1 to 3, wherein the plurality of switching devices are configured to:
in response to reception of a third group of control signals, convert a third direct current power received from the energy storage apparatus (200) through the first direct current port (150) into a third alternating current power at the second alternating current port (170), to provide the third alternating current power for the first load (300).

5. The conversion apparatus (100) according to claim 4, wherein an alternating current frequency associated with the third alternating current power is different from an alternating current frequency associated with the first alternating current power or the second alternating current power.

6. The conversion apparatus (100) according to any one of claims 1 to 5, further comprising:
a load switch (190), coupled between the second alternating current port (170) and the first load (300).

7. The conversion apparatus (100) according to any one of claims 1 to 6, wherein the converter (110) comprises a first bridge arm (1101) and a second bridge arm (1102), each of the first bridge arm (1101) and the second bridge arm (1102) comprises at least two switching devices in the plurality of switching devices, and both the first alternating current port (160) and the second alternating current port (170) are coupled to the first bridge arm (1101) and the second bridge arm (1102).

8. The conversion apparatus (100) according to any one of claims 1 to 7, wherein the first converter (110) comprises the first bridge arm (1101), the second bridge arm (1102), and a third bridge arm (1103), each of the first bridge arm (1101), the second bridge arm (1102), and the third bridge arm (1103) comprises at least two switching devices in the plurality of switching devices, the first alternating current port (160) is coupled to the first bridge arm (1101) and the second bridge arm (1102), and the second alternating current port (170) is coupled to the second bridge arm (1102) and the third bridge arm (1103).

9. The conversion apparatus (100) according to claim 4, further comprising:
a second converter (100-1), coupled between the first direct current port (150) and the energy storage apparatus (200), and configured to perform a boost operation when the plurality of switching devices operate in response to the third group of control signals, so that a voltage of the first direct current port (150) is higher than a voltage of the energy storage apparatus (200).

10. The conversion apparatus (100) according to any one of claims 1 to 9, wherein the first load (300) comprises at least one of a linear motor or a speaker.

11. A conversion apparatus (1000"), comprising:
a third converter (110-1"), comprising a first group of switching devices, wherein the third converter (110-1") is configured to turn on and off the first group of switching devices for conversion between an alternating current power and a direct current power;
a fourth converter (110-2"), comprising a second group of switching devices, wherein the fourth converter (110-2") is configured to turn on and off the second group of switching devices to convert a direct current power to an alternating current power;
at least one second direct current port (151", 152"), configured to couple the third converter (110-1") and the fourth converter (110-2") to an energy storage apparatus (200);
a third alternating current port (160"), configured to couple the third converter (110-1") to a wireless charging coil (400);
a fourth alternating current port (170"), configured to couple the fourth converter (110-2") to a first load (300); and
a fifth converter (110-3"), coupled to the third converter (110-1") and the fourth converter (110-2") through the at least one second direct current port (151", 152"), and coupled to the energy storage apparatus (200), and configured to increase a voltage of the energy storage apparatus (200) and output an increased voltage to at least one of the third converter (110-1") and the fourth converter (110-2").

12. The conversion apparatus (1000") according to claim 11, wherein the fifth converter (110-3") comprises a first switching device (Q1") and a second switching device (Q2"), and the fifth converter (110-3") is configured to increase the voltage of the energy storage apparatus (200) through the first switching device (Q1") and the second switching device (Q2"), and output an increased voltage to at least one of the third converter (110-1") and the fourth converter (110-2").

13. The conversion apparatus (1000") according to claim 11, wherein the fifth converter (110-3") comprises a first switching device (Q1"), a second switching device (Q2"), and a third switching device (Q3"), and the fifth converter (110-3") is configured to increase the voltage of the energy storage apparatus (200) through the first switching device (Q1") and the second switching device (Q2") and output an increased voltage to the third converter (110-1"), and is configured to increase the voltage of the energy storage apparatus (200) through the third switching device (Q3") and the second switching device (Q2") and output an increased voltage to the fourth converter (110-2").

14. An electronic device (1000), comprising:
an energy storage apparatus (200);
a first load (300);
a wireless charging coil (400);
the conversion apparatus (100) according to claims 1 to 13; and
a processing apparatus (500), configured to send an instruction to the conversion apparatus (100).

15. A method for controlling a conversion apparatus (100), wherein the conversion apparatus (100) comprises a first converter (110), the first converter (110) is coupled to a first direct current port (150) of an energy storage apparatus (200), the first converter (110) is coupled to a first alternating current port (160) of a wireless charging coil (400), and the first converter (110) is coupled to a second alternating current port (170) of a first load (300); and the method comprises:
controlling on/off of a plurality of switching devices in the first converter (110) for conversion between an alternating current power and a direct current power.

16. The method according to claim 15, wherein the controlling on/off of a plurality of switching devices in the first converter (110) for conversion between an alternating current power and a direct current power comprises:
in response to reception of a first group of control signals by the plurality of switching devices, converting a first alternating current power received from the wireless charging coil (400) through the first alternating current port (160) into a first direct current power at the first direct current port (150), to provide the first direct current power for the energy storage apparatus (200).

17. The method according to claim 16, wherein the controlling on/off of a plurality of switching devices in the first converter (110) for conversion between an alternating current power and a direct current power further comprises:
in response to reception of a second group of control signals by the plurality of switching devices, converting a second direct current power received from the energy storage apparatus (200) through the first direct current port (150) into a second alternating current power at the first alternating current port (160), to provide the second alternating current power for the wireless charging coil (400).

18. The method according to claim 17, wherein the controlling on/off of a plurality of switching devices in the first converter (110) for conversion between an alternating current power and a direct current power further comprises:
in response to reception of a third group of control signals by the plurality of switching devices, converting a third direct current power received from the energy storage apparatus (200) through the first direct current port (150) into a third alternating current power at the second alternating current port (170), to provide the third alternating current power for the first load (300).

19. The method according to claim 18, wherein an alternating current frequency associated with the third alternating current power is different from an alternating current frequency associated with the first alternating current power or the second alternating current power.
